# EUROPÄISCHE PATENTANMELDUNG

(11) **EP 0 716 254 A1**
(43) Veröffentlichungstag der Anmeldung: **12.06.1996**
(21) Anmeldenummer: 95810695.7
(22) Anmeldetag: 07.11.1995
(51) Int. Cl.: F16K 5/18, F16K 31/60

(54) **Vorrichtung zum Absperren einer Rohrleitung**

(30) Priorität: 10.11.1994 CH 3370/94
(71) Anmelder: DOMOTEC AG, CH-4663 Aarburg (CH)
(72) Erfinder: Gerhard Hans, CH-4805 Bruttnau (CH)
(74) Vertreter: Keller, René, Dr.

(57) **Zusammenfassung**

Die Vorrichtung (1) zum Absperren einer Rohrleitung (3) hat ein die Rohrleitungsanschlüsse tragendes Gehäuse (5), in dem wenigstens eine radial bewegbare Verschiebeeinheit (20,25,42,52a,52b) zum Abheben bzw. Anpressen eines Verschlußstücks (24) von wenigstens einer der in den Gehäuseinnenraum (7) einmündenden Rohreingangsöffnungen (23) angeordnet ist. Ferner ist im Gehäuse eine Verstelleinheit (21) zur Verschwenkung jedes abgehobenen Verschlußstücks (24) vorhanden. Das Gehäuse (5) weist einen den Gehäuseinnenraum (7) fluiddicht verschließenden, seitlich, bevorzugt einseitig abnehmbaren Deckel (11) auf, um Bauelemente, insbesondere das Verschlußstück (24), auf einfache Art und Weise rasch reinigen und/oder ersetzen zu können.

Bei einer bevorzugten Ausgestaltung einer in einer Hohlwelle liegenden Innenwelle erfolgen die Absperr- und Öffnungsvorgänge lediglich mit einer einzigen Bedieneinheit.

## Beschreibung

Die Erfindung betrifft eine Vorrichtung zum Absperren einer Rohrleitung gemäß dem Oberbegriff des Patentanspruchs 1.

Aus der SU 653 196 und der DE-A 39 26 519 ist eine Vorrichtung zum Absperren von Rohrleitungen bekannt, bei der das Verschlußstück zum Öffnen bzw. zum Schließen des Rohrleitungsmundes zuerst radial zu diesem bewegt und erst dann weggeschwenkt wird. Bei aggressiven Flüssigkeiten kann nun eine Korrosion des Verschlußstückes erfolgen; auch können sich bei kalkhaltigem Wasser Ablagerungen ansetzen. Um die Funktionsfähigkeit der Absperrvorrichtung zu erhalten, mußte dieses deshalb ausgebaut und einer Revision unterzogen werden.

Aufgabe der Erfindung ist es, eine Vorrichtung zu schaffen, die gegenüber den bekannten Vorrichtungen einen höheren Nutzungsgrad infolge kürzerer Revisionszeiten aufweist.

Die Aufgabe wird dadurch gelöst, daß die erfindungsgemäße Vorrichtung derart ausgestaltet ist, daß ein den Gehäuseinnenraum des Gehäusegrundkörpers fluiddicht verschließender Deckel seitlich, insbesondere einseitig abnehmbar ist. Hierdurch können in der Vorrichtung enthaltenen Bauelemente, wie insbesondere das Verschlußstück, welche infolge von Aggressivität des durch die Vorrichtung fließenden Fluids beispielsweise Anlagerungen und/oder Korrosion aufweisen, rasch ausgetauscht, gereinigt und/oder überarbeitet werden, ohne die gesamte Vorrichtung aus dem Rohrnetz herauszunehmen. Auch läßt sich der nun freie Innenraum einfach reinigen. Die gesamte Vorrichtung ist zu Reinigungszwecken nur mit ein paar Handgriffen auseinandernehmbar. Die erfindungsgemäße Vorrichtung hat aufgrund ihrer Servicefreundlichkeit einen bedeutend höheren Nutzungsgrad als die bekannten.

Eine radiale Verschiebung des Verschlußstücks läßt sich bevorzugt mit einem Exzenter ausführen, dessen Exzenterwelle in einer Hohlwelle sitzt, welche zur Verdrehung der das Verschlußstück tragenden Verstelleinheit dient. Wird der für die Verdrehbarkeit benötigte zylindrische Gehäuseinnenraum seitlich mit einem Deckel verschließbar ausgebildet, durch den die Wellen geführt werden, so ergibt die Konstruktion diese ausgezeichnete Servicefreundlichkeit. Diese Servicefreundlichkeit läßt sich noch erhöhen, wenn der Querschnitt der das Verschlußstück aufnehmenden Verstelleinheit an der Querschnitt der mit dem Deckel abgedeckten Öffung des Gehäusegrundkörpers so aufeinander abgestimmt sind, daß die Verstelleinheit zusammen mit dem Verschlußstück herausnehmbar ist. Dieser Vorteil wird dadurch erreicht, daß im Gegensatz zu den aus dem Stand der Technik bekannten Vorrichtungen eine Lagerung der Wellen in den Seitenwänden des Gehäusegrundkörpers nicht mehr erfolgt. Bei der Erfindung ist die den Exzenter tragende innere Welle lediglich in der das Verschlußstück tragenden Verstelleinheit gelagert. Die Verstelleinheit ist ohne jegliche Lagerung in den Seitenwänden des Gehäusegrundkörpers verdrehbar. Sie rutscht nämlich auf der Innenwandung des Gehäuseinnenraums. Dieses Rutschen ist nahezu verschleißfrei möglich, da durch das Wegbewegen des Verschlußstücks vom Rohreingangsmund in den Gehäuseinnenraum keine oder nur eine zu vernachlässigende Karft auf die nun zu verdrehenden Verstelleinheit wirkt.

Beidseitig abnehmbare Deckel mit den entsprechenden Abdichtungen sind zwar möglich. Bevorzugt wird man lediglich einen einseitig abnehmbaren Deckel vorsehen, um möglichst wenig abzudichtende Öffnungen zu haben. Man wird den abnehmbaren Deckel immer an der Gehäusegrundkörperseite anordnen, an der auch die Bedieneinheit sitzt, da hier die Absperrvorrichtung im eingebauten Zustand frei zugänglich ist.

Die bevorzugte Ausgestaltung einer in einer Hohlwelle liegenden Innenwelle erlaubt die unten beschriebene Verstellung lediglich mit nur einer einzigen Bedieneinheit (Handrad).

Im folgenden werden Beispiele der erfindungsgemäßen Vorrichtung anhand von Zeichnungen näher erläutert. Weitere Vorteile der Erfindung ergeben sich aus dem nachfolgenden Beschreibungstext. Es zeigen:
- Fig. 1: einen Querschnitt einer erfindungsgemäßen Vorrichtung entlang der Linie I - I in **Figur 2**, wobei hier die Bedieneinheit zur Verstellung weggelassen ist,
- Fig. 2: einen Querschnitt durch die in **Figur 1** dargestellte Vorrichtung entlang der Linie II - II in **Figur 1**, wobei hier eine Rohrleitung abgesperrt ist,
- Fig. 3: einen zur **Figur 2** analogen Querschnitt, wobei die Vorrichtung in Bereitstellung für das Verstellen des Verschlußstücks der Vorrichtung dargestellt ist,
- Fig. 4: einen zur **Figur 2** analogen Querschnitt bei geöffneter Rohrleitung,
- Fig. 5: eine schematische Darstellung der Funktionsweise der Bewegungskopplung der radialen Verschiebbarkeit des Verschlußstücks mit dessen Verschiebung gegenüber der abzusperrenden Rohrleitung, wobei die Darstellung in einer linearen Abwicklung erfolgt,
- Fig. 6a und 6b: je einen Querschnitt analog **Figur 1** mit aufgesetztem Handrad als Bedieneinheit, wobei

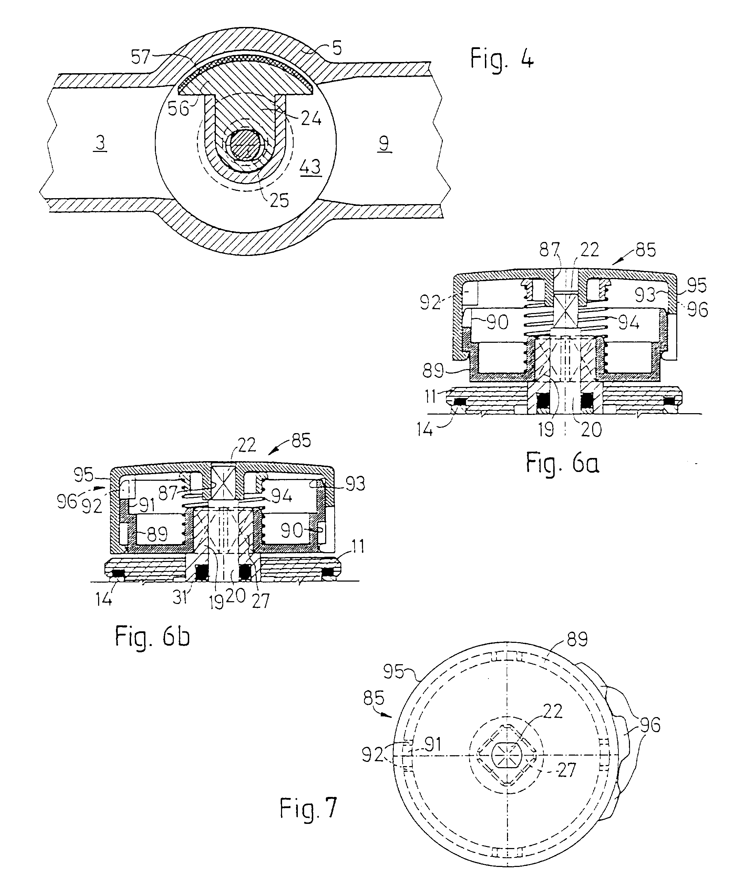

**Figur 6a** den ausgekoppelten Zustand zeigt, bei dem lediglich die innere Welle mit dem Exzenter zum radialen Verstellen des Verschlußstücks im Eingriff ist, und
**Figur 6b** den eingekoppelten Zustand zeigt, bei dem innere Welle und Hohlwelle zusammen für das Verdrehen des Verschlußstücks verstellbar sind, sowie
- Fig. 7: eine Draufsicht auf das in den **Figuren 6a** und **6b** dargestellte Handrad.

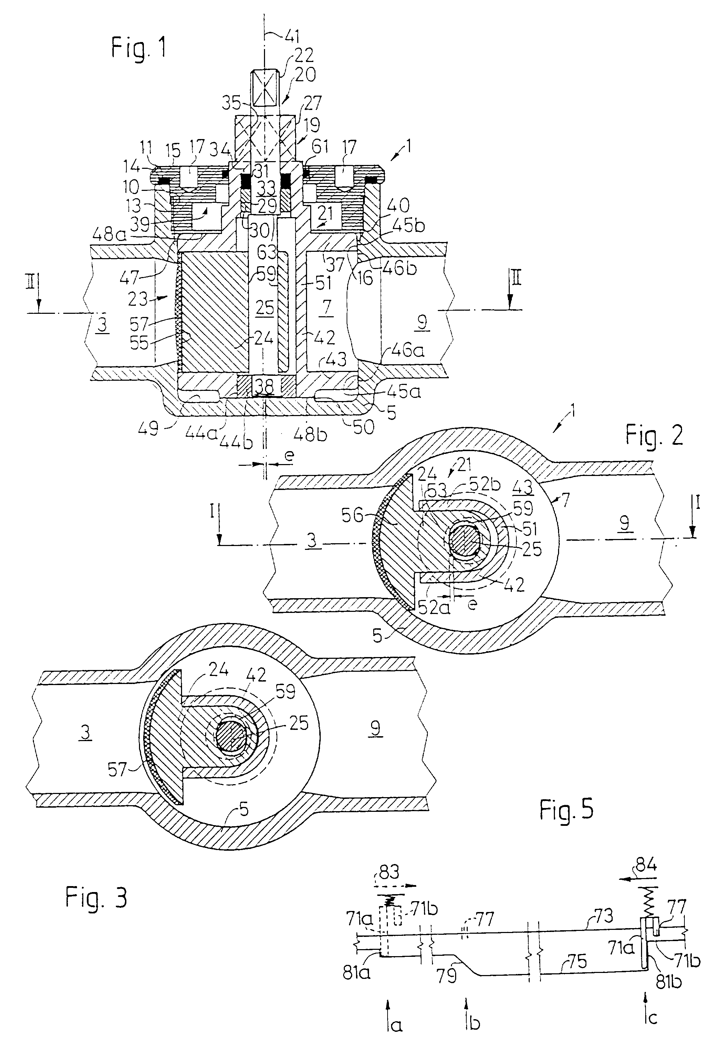

Die in **Figur 1** dargestellte Vorrichtung **1** zum Absperren einer Rohrleitung **3** hat einen Gehäusegrundkörper **5** mit einem zylindrischen Innenaum **7** sowie eine mit der Rohrleitung **3** fluchtende Rohrausgangsleitung **9**. Wie unten ausgeführt, ist das Fluchten der beiden Rohrleitungen **3** und **9** nicht zwingend, auch können mehrere Rohrleitungsein- bzw. -ausgänge in den Innenraum **7** hineinführen. Der Innenraum **7** ist mit einem, ein Außengewinde **10** aufweisenden Deckel **11**, welches in ein Innengewinde **13** im Innenraum **7** eingeschraubt ist, fluiddicht verschlossen. Der Deckel **11** ist gegenüber der Öffnung **16** des Gehäusegrundkörper **5** mit einer Ringdichtung **14** abgedichtet. Von der Deckeloberfläche **15** gehen mehrere Sacklöcher **17** in den Deckel **11**. In die Sacklöcher **17** ist ein nicht dargestelltes Werkzeug zum Ab- und Aufschrauben des Deckels **11** einsetzbar.

Durch einen zentrischen Durchbruch **12** im Deckel **11** läuft eine Hohlwelle **19**, in der eine Welle **20** liegt. Die Hohlwelle **19** ist Bestandteil einer Verstelleinheit **21**, in der ein die Rohröffnung **23** der Eingangsrohrleitung **3** verschließendes Verschlußstück **24** mit einem auf der Welle **20** angeordneten Exzenter **25** radial verschiebbar ist.

Der über die Deckeloberfläche **15** vorstehende Teil **27** der Hohlwelle **19** der Verstelleinheit **21** ist mit einem kantigen Querschnitt, hier einem vierkantigen, ausgebildet, damit eine unten beschriebene Bedieneinheit **85** für die Verstellung formschlüssig aufsetzbar ist. Analog ist auch der über das freie Ende der Hohlwelle **19** vorstehende Teil **22** der Welle **20** ausgebildet, um auch hier eine Bedieneinheit aufsetzen zu können. Im Bereich des Deckeldurchbruchs **12** wird der Hohlwelleninnenquerschnitt mit einer Stufe **34** in einen Bereich **29** erweitert. Der erweiterte Bereich dient zur Aufnahme eines Lagers **30** für die Welle **20** und einer Scheibendichtung **31**. Die Scheibendichtung **31** dichtet den zentrischen Wellenbereich **33** der Welle **20** gegenüber der Innenstufe **34** in der Innenbohrung **35** der Hohlwelle **19** ab. An den zentrischen Bereich **33** der Welle **20** schließt sich ein zylindrischer Wellenbereich **25** an, der um eine Exzentrizität e gegenüber der Drehachse **41** der Welle **20** sowie der Hohlwelle **19** versetzt ist. Mit dieser Exzentrizität e wird die radiale Verschiebung des Verschlußstücks **24**, wie unten ausgeführt ist, vorgenommen. An diesen Wellenbereich **25** schließt wieder ein koaxial zur Drehachse **41** verlaufendes Wellenendstück **38** an.

Die Hohlwelle **19** geht nach der Innenquerschnitterweiterung **29** im Bereich des inneren Gewindeendes **40**, um eine Toleranz distanziert von der Deckelinnenseite **39**, in eine Kreisscheibe **37** über. Die Scheibe **37** ist über eine zur Drehachse **41** koaxiale Strebe **42** mit einer weiteren Kreisscheibe **43** verbunden. Die Scheibe **43** weist einen zur Drehachse **41** koaxialen Durchbruch **44a** auf, in dem ein Lager **44b** für das Wellenendstück **38** der Welle **20** sitzt. Zwischen den beiden Scheiben **37** und **43** ist das Verschlußstück **24** radial verschiebbar angeordnet. Die beiden Scheiben **37** und **43** dienen zur axialen Führung des Verschlußstücks **24** sowie zur radialen und axialen Führung der Verstelleinheit **21** im Innenraum **7**. Die radiale Führung der Verstelleinheit **21** erfolgt über die radiale Spieltoleranz der Scheibenaußenseite **45a** bzw. **45b** gegenüber dem betreffenden Innenbereich **46a** und **46b** des Innenraums **7**, welche aus Montagegründen nach innen versetzt sind, woraus sich anschließend an das Innengewinde **13** eine Stufe **47** ergibt. Die axiale Führung erfolgt über eine Spieltoleranz der Scheibe **37** gegenüber der Deckelinnenseite mit der dem Verschlußstück **24** abgewandten Seite **48a** der Scheibe **37** und gegenüber dem Boden **49** des Gehäusegrundkörpers **5** mit einem zur Drehachse **41** koaxialen Absatz **50** auf der dem Verschlußstück **24** angewandten Seite **48b** der Scheibe **43**. Der Außendurchmesser der beiden Scheiben **37** und **43** ist um eine Toleranz kleiner als der Durchmesser der Öffnung **16** des Gehäusegrundkörpers **5**, damit die Verstelleinheit **21** durch Öffnung **16** herausnehmbar ist.

Die Strebe **42** ist U-förmig geformt, wobei der gebogene Teil **51** koaxial zur Drehachse **42** angeordnet ist und die U-Schenkel **52a** und **52b** definitionsgemäß parallel zueinander verlaufen und spiegelbildlich zur Drehachse **42** angeordnet sind. Der Abstand der beiden Schenkel **52a** und **52b** voneinander ist um eine Spieltoleranz größer als die Breite des Stiels (Fußteil) **53** des im Querschnitt pilzförmig ausgebildeten Verschlußstücks **24**. Die Oberfläche **55** des im Querschnitt pilzhutförmigen Verschlußstückteils **56** weist eine zur Oberfläche **55** angepaßte und auf dieser aufgeklebte (aufvulkanisierte) elastische Dichtungsplatte **57** auf. Nur der Querschnitt des Verschlußstücks **24** ist pilzförmig, ansonsten verläuft dessen Oberfläche parallel zur Drehachse **41**.

Das Verschlußstück **24** hat in seinem Stiel **53** eine Längsbohrung **59** parallel zur Drehachse **41**, in der der Wellenbereich **36** steckt. Da auf den um die Exzentrizität e versetzten Wellenbereich **36** ein wieder koaxial zur Drehachse **41** angeordneter Wellenendbereich **38** folgt, ist die Längsbohrung **59**, wie z. B. in **Figur 2** sichtbar, für die Wellenmontage nicht kreisförmig, sondern hier oval ausgebildet. Die Längsbohrung **59** kann mit einer im Querschnitt kreisförmigen Längsbohrung ausgebildet werden, falls der Endbereich **38** der Welle **20** erst nach dem Einstecken des Wellenbereichs **36** in die Längsbohrung aufgesetzt, z. B. aufgeschraubt wird, oder auf das Endstück **38** vollständig verzichtet wird. Es erübrigt sich dann auch das Lager **44b**.

Die Abdichtung der Verstelleinheit **21** gegen außen erfolgt über eine in den Deckeldurchbruch **12** eingelegte Ringdichtung **61**, welche gegen die Oberfläche des Wellenbereichs **33** drückt. Die Welle **20** ist gegen Herausziehen mit einem Formschluß gesichert, da das Lager **30** auf einem Absatz **63** zwischen den Wellenbereichen **33** und **36** bei einer axialen Wellenbewegung ansteht.

Die Verschiebeeinheit setzt sich somit aus der Welle 20 mit dem exzentrisch angeordneten Wellenbereich **25**, der Längsbohrung **59**, der Strebe **42** und deren U-Schenkel **52a** und **52b** zusammen.

Die nicht dargestellten Leitungsanschlüsse der Vorrichtung **1** können nun als Flansche oder als Schraubgewinde an den dem Innenraum **7** abgewandten Enden der Rohrleitungen **3** und **9** ausgebildet sein.

Zum Zusammenbau der Vorrichtung **1** werden zuerst die Scheibendichtung **31** und das Lager **30** in die Innenquerschnittserweiterung **29** eingesetzt sowie das Verschlußstück **24** zwischen die Scheiben **37** und **43** gesteckt. Anschließend wird die Welle **20** beginnend mit dem Wellenteil **22** durch die Längsbohrung **59** des Verschlußstücks **24**, durch die Öffnung des Lagers **30** und der Scheibendichtung **31** und die Innenbohrung **35** der Verstelleinheit **21** gesteckt. Das Lager **44b** wird unter Aufnahme des Wellenendbereichs **38** in den Durchbruch **44a** der Scheibe **43** eingesetzt. Die Welle **20** wird nun gegenüber der Verstelleinheit **21** derart verdreht, daß das Verschlußstück **24** gegen die Drehachse **41** zurückgezogen ist. Die bisher zusammengesetzte Baugruppe wird nun nach Einsatz der Ringdichtung **14** in den Deckel **11** in den Innenraum **7** des Gehäusegrundkörpers **5** eingesetzt und der Deckeldurchbruch **12** über den als Hohlwelle **19** ausgebildeten Teil der Verstelleinheit **21** geschoben. Der Deckel **11** wird anschließend in die Öffnung des Gehäusegrundkörpers **5** bis zum dichtenden Anschlag eingeschraubt.

Nachfolgend wird die Funktionsweise der Vorrichtung anhand der Figuren **2** bis **4** erklärt:
In **Figur 2** befindet sich das Verschlußstück **24** vor der zu verschließenden Rohröffnung **23** der Rohrleitung **3**. Die Dichtungsplatte **57** des Verschlußstücks **24** ist durch Verstellen des exzentrisch angeordneten Wellenbereichs **25** dichtend gegen den Rand der Rohröffnung **23** gedrückt. Infolge der Elastizität der Dichtungsplatte **57** wird der Dichteffekt auch bei nicht ganz perfekter Oberfläche des Verschlußstücks **24** sowie der Ränder der Rohröffnung **23** nicht beeinträchtigt, da Unebenheiten elastisch überdeckt werden.

Zum Öffnen wird zuerst die Welle **20** gegenüber der Hohlwelle **19** derart verdreht, daß durch das exzentrisch angeordnete Wellenstück **25** ein Abheben des Verschlußstücks **24** und dessen Dichtungsplatte **57** von der Rohröffnung **23** erfolgt, wie in **Figur 3** dargestellt ist. Anschließend werden Welle **20** und Hohlwelle **19** zusammen verdreht, bis die in **Figur 4** gezeigte Position des Verschlußstücks **24** erreicht ist.

Zum Schließen erfolgt obiger Vorgang in umgekehrter Reihenfolge.

Anstelle Welle **20** und Hohlwelle **19** für die einzelnen Vorgänge getrennt mit je einem Handantrieb zu bewegen, können sie auch miteinander derart verkoppelt werden, daß der Vorgang zum Schließen und Öffnen mit nur einem einzigen Handrad oder einem einzigen Handhebel als Bedieneinheit durchführbar ist.

Ein Kopplungbeispiel ist schematisch in **Figur 5** dargestellt, wobei hier der Drehvorgang in eine lineare Bewegung der besseren Übersicht wegen "abgewickelt" dargestellt ist. Als Koppelelement wird ein mit der den Exzenter aufweisenden Welle **20** zu verbindender, in dessen Längsrichtung gefedert gehaltener Doppelstift **71a/b** sowie eine mit der Hohlwelle **19** zu verbindende erste **73** und eine mit dem Gehäusedeckel **11** zu verbindende zweite Bahn **75** verwendet. Die beiden Stifte **71a** und **71b** sind starr miteinander in Verschieberichtung verbunden. Die erste Bahn **73** weist eine Bohrung **77** auf, in die der erste Stift mit einer Spielpassung eindringen kann, und die zweite Bahn **75** eine Rampe **79** sowie zwei Anschläge **81a** und **81b**, wobei die Breite beider Bahnen **73** und **75** so groß ist, daß jeweils der ihr zugeordnete Stift **71a** bzw. **71b** darauf gleiten kann. Um die Vorgänge zeichnerisch einfacher darstellen zu können, sind die in der Zeichenebene hintereinander angeordneten Stifte **71a** und **71b** nebeneinander versetzt und unterschiedlich groß dargestellt.

Zur Darstellung des gekoppelten Verstellungsvorgangs wird von dem in **Figur 2** dargestellten abgesperrten Zustand der Rohrleitung **3** ausgegangen, welcher in **Figur 5** der Position a mit den gestrichelt dargestellten Stiften **71a** und **71b** entspricht. Zum Öffnen der Absperrung wird nun die einzige, direkt mit den Stiften **71a** und **71b** und der Welle **20** verbundene (nicht dargestellte) Handbedienung verdreht, wodurch durch den exzentrisch angeordneten Wellenbereich **25** das Verschlußstück **24** aus seiner dichtenden Lage herausgezogen wird; der Stift **71a** wandert in Richtung des Pfeils **83**. In der Position **b** weist die Bahn **75** eine Rampe **79** auf. Rutscht der Stift **71a** diese Rampe **79** entlang, wird er abgesenkt und der Stift **71b** greift in eine gestrichelt dargestellte Bohrung **77** der noch ruhenden Bahn **73**. Erst wenn der Stift **71b** eingegriffen hat, wird diese Bahn **73** mitgenommen. Ortstoleranzen eliminieren sich beim Eingreifvorgang aufgrund der federnden Halterung der Stifte **71a** und **71b**. In der Position **b** ist das Verschlußstück **24** vollständig nach innen ausgerückt und die Verdrehung der Verstelleinheit beginnt, was dem Zustand der **Figur 3** entspricht. Es erfolgt nun eine Verdrehung, bis der Stift **71a** am Anschlag **81b** anschlägt (Position **c**). Dies entspricht dem in **Figur 4** dargestellten Zustand.

Zum Absperren der Rohrleitung **3** wird von der in **Figur 4** dargestellten Lage und der ausgezogenen Darstellung in **Figur 5** ausgegangen. Da sich der Stift **71b** in der Bohrung **77** befindet, erfolgt die Verdrehung von Welle **20** und Hohlwelle **19** in Richtung **84** solange gemeinsam, bis durch Hinaufgleiten des Stiftes **71a** auf der Rampe **79** der Stift **71b** aus der Bohrung **77** herausgezogen wird (Position **b**) und nun nur noch die Welle **20** zum Anpressen des Verschlußstücks **25** weitergedreht wird, bis der Stift **71a** den Anschlag **81a** erreicht hat (Position **a**).

Anstelle einer Auf- und Abbewegung der Stifte **71a** und **71** kann auch eine seitliche Auslenkung und ein Einrasten in einer Nut anstelle eines Eingreifens in der Bohrung **77** erfolgen.

Die Scheiben **37** und **43** können, da sie nur zur Führung dienen, auch als Segmente ausgebildet sein.

Eine andere, bevorzugte Ausführung einer Bedieneinheit, hier eines Handrads **85** zur Koppelung der beiden Bewegungsvorgänge von Verschiebe- und Verstelleinheit ist in den **Figuren 6a** und **6b** sowie **7** dargestellt. Die **Figur 6a** zeigt die Handradlage, in der lediglich das Verschlußstück **24** über das Ende **22** der den Exzenter **25** aufweisenden Welle **20** verstellbar ist. **Figur 6b** zeigt das Handrad **85** im Eingriff auf die Welle **20** und die Hohlwelle **19**.

Das Handrad **85** hat eine innere Ausnehmung **87**, deren Querschnitt, wie in **Figur 7** dargestellt ist, mit einer Spielpassung auf dem für einen Formschluß axial abgefrästen Wellenende axial verschiebbar ist. Auf dem als Vierkant **27** ausgebildeten Wellenende der Hohlwelle **19** ist ein Teller **89** aufgeschrumpft bzw. aufgepreßt. Der Tellerrand **90** weist an seiner Außenseite vier axial verlaufende Stege **91** auf. Diese Stege **91** greifen in hierzu mit Spielpassung laufende, axial angeordnete Nuten **92** des inneren Handradrands **93** ein. Das Handrad **85** wird durch eine Druckfeder **94** so weit nach außen gedrückt, bis im unbelasteten Zustand die Stege **91** gerade nicht in die Nuten **92** greifen. Wird das Handrad **85** in Richtung Deckel **11** gedrückt, d. h. die Feder **94** zusammengedrückt, so greifen Nuten **92** und Stege **91** ineinander; Hohlwelle **19** und Welle **20** sind in ihrer Drehbewegung miteinander verkoppelt. Das Eindrücken des Handrads **85** kann nur in Positionen erfolgen, in denen die Stege **91** über den Nuten **92** stehen; d. h. in der der Exzenter **25** das Verschlußstück **24** maximal aus der Rohröffnung **23** zurückgezogen hat. Zur verbesserten Griffigkeit hat das Handrad **85** an seinem Außenrand **95** eine Profilierung **96**, welche in **Figur 7** lediglich angedeutet ist.

Anstelle dieser Kopplungsart der beiden Drehbewegungen können selbstverständlich auch andere Konstruktionen gewählt werden. Es kann beispielsweise auf den Teller **89** verzichtet werden, sofern das Handrad auf seiner Innenseite ein passendes Innenteil aufweist, welches formschlüssig über den beispielsweisen Außenvierkant des Hohlwellenendes schiebbar ist. Auch ist ein Anschlag vorzusehen, der ein "Abfallen" des Handrads (verstärkt durch die Kraft der Druckfeder) von dem bzw. den Wellenenden unterbindet.

Der Gehäusegrundkörper **5**, das Grundelement des Verschlußstücks **24** sowie die Verstelleinheit werden bevorzugt aus Metallguß hergestellt.

Anstelle nur eine einzige Rohreingangsöffnung **23** zu verschließen und zu öffnen, können unter Verwendung mehrerer auf ein- und derselben Welle angeordneter exzentrisch versetzter Wellenbereiche mehrere Rohröffnungen bedient werden. Die Bereiche können auf der Welle auch axial sowie exzentrisch gegeneinander versetzt angeordnet sein. Mit diesem Aufbau kann nicht nur ein Zwei-, sondern ein Drei- und Mehrwegeventil verwirklicht werden.

Die in der Hohlewelle **19** angeordnete Welle **20** als Kraftübertragungselement zum Schließen und Öffnen haben sich bewährt, es wären jedoch auch andere Elemente, wie z. B. Schieber mit dem entsprechenden Übertragungselementen möglich.

## Patentansprüche

1. Vorrichtung **(1)** zum Absperren einer Rohrleitung **(3, 9)** mit einem die Rohrleitungsanschlüsse tragenden Gehäusegrundkörper **(5)**, in dem wenigstens eine radial bewegbare Verschiebeeinheit **(20, 25, 42, 52a, 52b)** zum Abheben bzw. Anpressen eines Verschlußstücks **(24)** von wenigstens einer der in den Gehäuseinnenraum **(7)** einmündenden Rohreingangsöffnungen **(23)** sowie in dem eine Verstelleinheit **(21)** zur Verschwenkung jedes abgehobenen Verschlußstücks **(24)** angeordnet ist, gekennzeichnet durch einen den Gehäuseinnenraum **(7)** des Gehäusegrundkörpers **(5)** fluiddicht verschließenden, seitlich, bevorzugt einseitig abnehmbaren, Deckel **(11)**, um insbesondere das Verschlußstück **(24)** auf einfache Art und Weise rasch reinigen und/oder ersetzen zu können.

2. Vorrichtung **(1)** nach Anspruch 1, **gekennzeichnet durch** ein erstes und ein zweites Kraftübertragungselement **(20, 19)**, welche fluiddicht durch den Deckel **(11)** zum Verstellen der Verschiebeeinheit **(20, 25, 42, 52a, 52b)** sowie der Verstelleinheit **(21)** geführt sind, wobei bevorzugt das erste **(20)** innerhalb der zweiten **(19)** verläuft.

3. Vorrichtung **(1)** nach Anspruch 2, **dadurch gekennzeichnet**, daß das erste Kraftübertragungselement **(20)** insbesondere als Welle ausgebildet ist sowie verstellbar, insbesondere verdrehbar lediglich am bzw. im zweiten Kraftübertragungselement **(19)** gehalten ist und somit nur das zweite Kraftübertragungselement **(20)** im Gehäuseinnenraum **(7)** des Grundkörpers **(5)** gelagert, insbesondere verdrehbar gegenüber diesem **(7)** gelagert ist.

4. Vorrichtung nach Anspruch 2 oder 3, **dadurch gekennzeichnet**, daß der Gehäusegrundkörper **(5)** einen zylindrischen Innenraum **(7)** hat, und die Verstelleinheit **(21)** eine rotationssymmetrische Außenkontur, insbesondere wenigstens einen Kreisscheibenrand aufweist, auf der sie **(21)** gleitend im Gehäuseinnenraum **(7)** verdrehbar ist.

5. Vorrichtung nach einem der Ansprüche 1 bis 4, **dadurch gekennzeichnet**, daß der Querschnitt der mit dem Deckel **(11)** verschließbaren Gehäuseöffnung **(16)** im Gehäusegrundkörper **(5)** um eine Toleranz größer ist als der Außenquerschnitt der Verstelleinheit **(21)**.

6. Vorrichtung **(1)** nach einem der Ansprüche 1 bis 5, **dadurch gekennzeichnet**, daß jede Verschiebeeinheit **(20, 25, 42, 52a, 52b)** einen Exzenter **(25)** aufweist, um dessen Drehachse **(41)** jedes Verschlußstück **(24)** mit der Verstelleinheit **(21)** zwischen jeweiliger Verschluß- und Offenstellung **(Fig. 2, Fig. 4)** verschwenkbar ist.

7. Vorrichtung nach einem der Ansprüche 2 bis 4 und 6, **dadurch gekennzeichnet**, daß das erste Kraftübertragungselement als Welle **(20)** ausgebildet ist, auf welcher der bzw. die Exzenter **(25)** angeordnet ist bzw. sind, sowie das zweite Kraftübertragungselement ebenfalls als eine Welle **(19)** ausgebildet ist, auf der jedes Verschlußstück **(24)** zentrisch angeordnet ist, wobei bevorzugt die zweite Welle **(19)** bzw. zweiten Wellen als Hohlwelle **(19)** bzw. -wellen ausgebildet ist bzw. sind, in der bzw. denen die erste Welle **(20)** angeordnet ist bzw. sind.

8. Vorrichtung **(1)** nach Anspruch 2, **gekennzeichnet durch** eine lageveränderliche Bedieneinheit **(85)**, in dessen erster Lage **(Fig. 6a)** das erste Kraftübertragungselement **(20)** und in dessen weiterer Lage **(Fig. 6b)** das erste und das zweite Kraftübertragungselement **(20, 19)** zusammen verstellbar sind bzw. ist.

9. Vorrichtung **(1)** nach den Ansprüchen 7 und 8, **dadurch gekennzeichnet**, daß das Ende der in der Hohlwelle **(19)** verlaufenden ersten Welle **(20)** über deren Ende verlängert ist und eine axial verlaufende Profilierung aufweist, auf der die Bedieneinheit **(85)** axial verschiebbar und kraftschlüssig in der ersten Lage **(Fig. 6a)** lediglich mit der ersten Welle **(20)** verdrehbar ist und am Hohlwellenende eine zweite Profilierung angeordnet ist, in welche die Bedieneinheit **(85)** in der zweiten Lage **(Fig. 6b)** axial einschiebbar ist, um die erste **(20)** zusammen mit der zweiten **(19)** Welle verdrehen zu können, wobei bevorzugt die Bedieneinheit **(85)** durch eine Feder **(94)** in einer ersten Lage **(Fig. 6a)** lediglich im Eingriff mit der ersten Welle **(20)** gehalten und gegen die Kraft der Feder **(94)** in eine zweite Lage **(Fig. 6b)** zum zusätzlichen Eingriff auf das Hohlwellenende bringbar ist.

10. Vorrichtung (1) nach einem der Ansprüche 1 bis 9, **dadurch gekennzeichnet**, daß das Verschlußstück **(24)** im Querschnitt pilzförmig ausgebildet ist, dessen Hutoberfläche **(55)** zum Verschließen der Rohreingangsöffnung **(23)** in Verschlußstellung **(Fig. 2)** dient und dessen Stiel **(53)** in einem Führungsteil **(52a, 52b)** der Verschiebeeinheit **(20, 25, 42, 52a, 52b)** radial verschiebbar ist.
